# EUROPEAN PATENT SPECIFICATION

(11) **EP 2 736 347 B1**
(45) Date of publication and mention of the grant of the patent: **14.10.2020**
(21) Application number: 11870037.6
(22) Date of filing: 27.07.2011
(51) Int. Cl.: A23L 2/395, A23P 10/40, A23P 10/47, A23C 9/154, A23C 9/16

(54) **PREPARATION PROCESS FOR POWDERED COMPOSITION FOR PRODUCTION OF ACIDIFIED MILK BEVERAGE**
VERFAHREN FüR PULVERFÖRMIGE ZUSAMMENSETZUNG ZUR HERSTELLUNG EINES SAUERMILCHGETRÄNKES
PROCÉDÉ DE PRÉPARATION D' UNE COMPOSITION EN POUDRE DESTINÉE À ÊTRE UTILISÉE DANS LA PRODUCTION D'UNE BOISSON LACTÉE ACIDIFIÉE

(43) Date of publication of application: 04.06.2014
(73) Proprietor: The Coca-Cola Company, Atlanta, GA 30313 (US)
(72) Inventor: CHHILLAR, Jitender, Shanghai 200241 (CN); SUN, Liguo, Shanghai 200241 (CN); WANG, Scarlett, Shanghai 200241 (CN); LIAO, Jianping, Shanghai 200241 (CN); ZHAO, Winnie, Shanghai 200241 (CN)
(74) Representative: Dehns
(86) International application number: PCT/CN2011/001231
(87) International publication number: WO 2013/013340

(56) References cited:
- EP-A2- 0 501 373
- CN-A- 102 018 048
- CN-A- 102 077 875
- CN-A- 102 106 388
- US-A1- 2005 158 443

## Description

### Technical Field

The present invention relates to a process for preparing a powdered composition for the production of an acidified milk beverage.

### Background Art

Acidified dairy beverage has become more and more popular and common as it forms not only a healthful but also a pleasant food substance. Where acidified dairy beverage in its usual form is dehydrated, it cannot be reconstituted into the smooth, creamy and pleasant tasting product by the simple addition of water, as might be expected.

It has been found that during drying, the characteristic texture of the acidified milk beverage is lost, the acidified milk beverage reconstituted from the dehydrated acidified milk with water remains fluid and the coagulated phase tends to separate rapidly from the aqueous phase.

Attempts have been made to provide powdered compositions suitable for mixing with water for the manufacture of an acidified milk beverage. For example, U.S. Pat. No. 5,972,393 provided a dehydrated acidified milk product made by preparing an aqueous composition containing milk protein. The aqueous composition is inoculated with a strain of *L. helveticus* and *S. thermophilus* and fermented to obtain a fermented composition having a pH of 4-5. The fermented composition is dried to obtain the dehydrated acidified product. However, the process is disadvantageous in that the essential strains are expensive and will increase the production cost. Moreover, they result in a type of "do-it-yourself' manufacture. In rapid manufacture of acidified milk beverages, these have resulted in poorly controlled growth conditions which tend to yield an inferior quality and taste.

Accordingly, there remains a need for powdered composition for the production of acidified milk beverage and a process for preparing such powdered composition. The acidified milk beverage thus obtained should have overall good stability and acceptable taste. The process for preparing the powdered composition should be able to be operated in a controlled way and thus is easy to be industrialized.

### Summary of the Invention

The invention provides a process for preparing a powdered composition for the production of an acidified milk beverage, comprising:
a) preparing an aqueous solution containing a milk-based ingredient and a stabilizer;
b) acidifying the aqueous solution with a food grade acid under high shear conditions for 30 to 60 minutes;
c) homogenizing the acidified solution; and
d) spray drying the acidified solution into a powder, wherein the powder comprises:
   i) 6-31% of a stabilizer, which is selected from the group consisting of carboxymethyl cellulose, pectin, xanthan, guar and carrageen;
   ii) 48-87% of a milk-based ingredient, which is milk powder or milk protein concentrate; and
   iii) 7-21% of a food-grade acid;
based on the total weight of the powder, wherein the sum of the amounts of all ingredients is equal to 100%; wherein the acidified solution has the total protein content of 1.0-7.0 wt% and a pH of 3.0-5.0; and wherein the food grade acid is added in the form of an aqueous solution at the concentration of 3.5-20 wt%.

The powdered composition formed by the method of the invention has very good stability during its shelf life, like the normal spray dried powders, and can be stably stored under ambient conditions for at least 1 months, 2 months, 3 months, 6 months, 9 months, or even 12 months. The powdered composition can be reconstituted with water in a simple way to form an acidified milk beverage. The thus obtained acidified milk beverage has overall good stability and acceptable taste. The process according to the invention for preparing the powdered composition can be simply operated in a controlled way and therefore is easy to be industrialized. Due to the good stability of the powdered composition, the commonly-used process for producing the acidified milk beverage, starting from dissolving stabilizers and milk-based ingredients, can be simplified. The powdered composition can be produced in a centralized plant, and then reconstituted with water and bottled in localized plants. This simplified process has the advantage of reducing investment for establishing plants, expanding quickly, and improving hygienic conditions conveniently.

### Detailed Description

The invention provides a process for preparing a powdered composition for the production of an acidified milk beverage, comprising:
b) preparing an aqueous solution containing a milk-based ingredient and a stabilizer;
b) acidifying the aqueous solution with a food grade acid under high shear conditions for 30 to 60 minutes;
c) homogenizing the acidified solution; and
d) spray drying the acidified solution into a powder, wherein the powder comprises:
   iv) 6-31% of a stabilizer, which is selected from the group consisting of carboxymethyl cellulose, pectin, xanthan, guar and carrageen;
   v) 48-87% of a milk-based ingredient, which is milk powder or milk protein concentrate; and
   vi) 7-21% of a food-grade acid;
based on the total weight of the powder, wherein the sum of the amounts of all ingredients is equal to 100%; wherein the acidified solution has the total protein content of 1.0-7.0 wt% and a pH of 3.0-5.0; and wherein the food grade acid is added in the form of an aqueous solution at the concentration of 3.5-20 wt%. For the purpose of the invention, the stabilizer is intended to mean an ingredient or combination of ingredients that is effective to prevent coagulation of milk proteins and sedimentation of any ingredients during the shelf life of an acidified milk beverage. The stabilizer is at least one selected from the group consisting of carboxymethyl cellulose, pectin, xanthan, guar and carrageen. In a preferred embodiment, the stabilizer comprises 70% or more, more preferably 90% or more, and even more preferably 100% of carboxymethyl cellulose, based on the total weight of the stabilizer. Various commercially available stabilizers can be used, e.g., stabilizer from Danisco.

The milk-based ingredient suitable for the invention is at least one selected from the group consisting of milk powder and milk protein concentrate. As an example, whole milk powder and/or skim milk powder can be used. Milk is animal milk, such as cow milk and goat milk or any combination thereof.

The food grade acid suitable for the invention can be an organic acid, an inorganic acid or a combination of two or more organic or inorganic acids. For example, the organic acid includes citric acid, lactic acid, malic acid or tartaric acid, and an example of the inorganic acid is phosphoric acid. Preferably, the food grade acid is at least one selected from the group consisting of citric acid, phosphoric acid and lactic acid.

The ingredients for preparing the spray dried powdered composition are added in the following amounts, based on the total weight of the composition,
- 6-31 % of the stabilizer,
- 48-87% of the milk-based ingredient, and
- 7-21 % of the food grade acid,

In a preferred embodiment, the ingredients for preparing the spray dried powdered composition are added in the following amounts, based on the total weight of the composition,
- 10-18% of the stabilizer,
- 70-78% of the milk-based ingredient, and
- 8-12% of the food grade acid,

In any case, the sum of the amounts of all ingredients is equal to 100%.

While the above-mentioned three ingredients are sufficient for producing the present powdered composition, other ingredients can preferably be added before acidification to improve or modify taste and texture of the spray dried powder. In an embodiment, a buffering or acid bite reducing agent, such as citrates, bicarbonates and phosphates, is added before acidification to smooth or reduce the acid flavor. The amount of the buffering or acid bite reducing agent can be adjusted to smooth or reduce the acid flavor to an acceptable level, thereby enhancing the flavor profile. In a preferred embodiment, the buffering or acid bite reducing agent is added in the amount of 0.3-0.7%, based on the total weight of the powdered composition.

In addition, one or more other food additives, such as an emulsifier, a flavor and a thickening agent can be added before acidification to prepare the powdered composition, as long as they have no negative effect on the rehydration of the powdered composition and the stability of the acidified milk beverage thus obtained. In some specific embodiments, starch is added before acidification to improve mouthfeel and texture. The amount of starch may be 0.5-5%, preferably 1-3%, more preferably 2.5%, 2.8%, 2.9% or 3.0%, based on the total weight of the powdered composition.

It is advantageous that the aqueous solution in the first step is uniform. To this end, various known methods and devices with good mixing effect can be used. In an embodiment, when milk powders are used as the milk-based ingredient, they are first dry mixed with the stabilizer before dissolution. In another embodiment, milk powders are first prepared in an aqueous solution, to which the stabilizer is then added, or vice versa. In a still another embodiment, milk powders and the stabilizer are separately prepared in an aqueous solution and then are mixed. The dissolution can be carried out at evaluated temperature in order to reduce the dissolving time. In each case, it is advantageous that the weight ratio of milk powder to water which it is to be mixed is 1:2.5 to 1:10, and the weight ratio of stabilizer powder to water is 1:30 to 1:60.

In the acidification step, the food grade acid is added in the form of an aqueous solution at the concentration of 3.5-20 wt%. The diluted food grade acid advantageously avoids the formation of some localized high acid area and therefore will not "shock" milk proteins during the acidification process of the aqueous composition.

For the purpose of the invention, high shear conditions are intended to refer to the shear rate of 3,000 rpm or more. The acidification under high shear conditions lasts for 30 - 60 min.

The solution after acidification has the total protein content of 1.0-7.0 wt% (according to Kjeldah method for total N), more preferably 1.5-6.5 wt% and most preferably 2.0-6.0 wt%, and a pH of 3.0-5.0, more preferably 3.5-4.5, and even more preferably 3.8-4.2. Not wishing to be limited by theory, it is believed that such appropriate protein content in cooperation with the pH value of 3.0-5.0 can, on the one hand, prevent the undesired coagulation of milk proteins during the storage of the acidified milk beverage, and on the other hand, ensure the excellent taste thereof.

The acidified solution is homogenized before spray drying. It has been surprisingly found by the inventor that homogenization before spray drying can minimize the oxidized taste. The oxidized taste causes flavor to appear weaker and makes the final acidified milk beverage look like stored for a while, and thus should be avoided as far as possible. The homogenization is thus preferred at this stage, more particularly in one or two steps, for example under a pressure of 50 to 150 bar.

The acidified solution is optionally pre-concentrated before spray drying. A typical example of the concentration is evaporation in vacuum, which is a conventional method in the food field.

The solution is generally concentrated to a dry matter content of 10% to 45% by weight.

In the spray drying step, a spray drier available from suppliers like GEA or SPX Anhydro can be used. It is convenient to utilize standard conditions from the suppliers of spray drier. In an embodiment, the inlet air temperature is 160-220°C, and outlet (exhausting) air temperature is 75-120°C.

An acidified milk beverage may be produced by mixing a powdered composition obtained by the present process with water, to which other ingredient, such as sugar, a flavor and a nutrient is optionally be added. The powdered composition and water are preferably mixed at the weight ratio of 1:10 to 1:200 depending on the protein desired in the final product. The resulting mixture is preferably homogenized in one or two steps, for example under a pressure of 50-150 bar. If necessary, the acidified milk beverage thus obtained can be subjected to high temperature short time method ("HTST", typically at about 110°C for 30 seconds) without the deterioration of the overall good stability.

The Examples that follow are intended to illustrate, and not to limit, the invention. All percentages and ratios used herein are by weight, unless otherwise indicated.

### Preparation Examples: ALL BELOW EXAMPLES ARE TO YIELD 2000 L BEVERAGE on rehydration to beverage

### Example 1:

A powdered composition was prepared by using the following steps:
a) 34 kg of whole milk powder, 6 kg of skim milk powder, and 0.2 kg of sodium citrate were dissolved using 60°C water, wherein the powder to water ratio was 1:3;
b) 8 kg of CMC was dissolved by using 75°C water, wherein the powder to water ratio was 1:40;
c) both milk & stabilizer solutions were cooled separately first to 15-30°C;
d) both cooled solutions were mixed well for 10-15 min;
e) 4.11 kg of citric acid and 1.38 kg of lactic acid were dissolved to make an aqueous solution. Acid concentration was near 10% w/w;
f) cooled milk & stabilizer solution was acidified at room temperature by adding the acid solution under high shear conditions: 3000-9000 RPM for 40 min;
g) acidified milk & stabilizer solution was homogenized at 150 bar and was dehydrated by using a spray drier available from GEA to powders. Standard conditions from the supplier of spray drier for commercial scale tests were used: Incoming hot air at 180°C and outlet air at the temperature of 80°C.

### Example 2:

A powdered composition was prepared using the same procedure as in Example 1, except that it contained the following amounts of the ingredients, wherein CMC, pectin and xanthan gum were used as stabilizers:

| **Components** | **Quantity, kg** |
|---|---|
| CMC | 8.9 |
| Pectin | 0.2 |
| Xanthan gum | 0.2 |
| Sod citrate | 0.33 |
| Whole Milk Powder | 33 |
| Skim Milk Powder | 6 |
| Citric acid | 4 |
| Lactic acid | 1.3 |

### Example 3:

A powdered composition was prepared using the same procedure as in Example 1, except that it contained the following amounts of the ingredients, wherein CMC, pectin and xanthan gum were used as stabilizers:

| **Components** | **Quantity, kg** |
|---|---|
| CMC | 1.6 |
| Pectin | 6 |
| Xanthan gum | 0.15 |
| Sod citrate | 0.4 |
| Whole Milk Powder | 34 |
| Skim Milk Powder | 6 |
| Citric acid | 4.1 |
| Lactic acid | 1.3 |

### Example 4:

A powdered composition was prepared using the same procedure as in Example 1, except that it contained the following amounts of the ingredients, wherein CMC, pectin and xanthan gum were used as stabilizers:

| **Components** | **Quantity, kg** |
|---|---|
| CMC | 1.0 |
| Pectin | 1.0 |
| Xanthan gum | 5.4 |
| Sod citrate | 0.5 |
| Whole Milk Powder | 34 |
| Skim Milk Powder | 6 |
| Citric acid | 4.1 |
| Lactic acid | 1.3 |

### Example 5:

A powdered composition was prepared by using the following steps:
a) 2.0 kg of starch were dissolved using 60 kg of 75°C water and hydrated for 15 min;
b) 38 kg of whole milk powder, 15 kg of whey protein concentrate powder, and 0.5 kg of sodium citrate were dissolved using 60°C water, wherein the powder to water ratio was 1:5;
c) 10 kg of CMC was dissolved by using 75°C water, wherein the powder to water ratio was 1:50;
d) all of the solutions were cooled separately first to 15-30°C ;
e) cooled solutions were mixed well for 10-15 min;
f) 4.6 kg of citric acid and 1.7 kg of phosphoric acid were dissolved to make an aqueous solution. Acid concentration was near 5% w/w;
g) cooled starch and milk & stabilizer solution was acidified at room temperature by adding the acid solution under high shear conditions: 3000-9000 RPM for 50 min;
h) the acidified solution was homogenized (150 bar) and was dehydrated by using a spray drier available from GEA NIRO to powders. Standard conditions from the supplier of spray drier for commercial scale tests were used: the inlet air temperature is 160-220°C, outlet (exhausting) air temperature is 75-120°C.

### Example 6:

A powdered composition was prepared using the same procedure as in Example 5, except that it contained the following amounts of the ingredients, wherein CMC, pectin and xanthan gum were used as stabilizers:

| **Components** | **Quantity, kg** |
|---|---|
| starch | 2.0 |
| CMC | 11.7 |
| Pectin | 0.29 |
| Xanthan gum | 0.29 |
| Sod citrate | 0.43 |
| Whole Milk Powder | 34 |
| Whey protein concentrate powder | 15 |
| Citric acid | 4.8 |
| Phosphoric acid | 1.5 |

### Example 7:

A powdered composition was prepared using the same procedure as in Example 5, except that it contained the following amounts of the ingredients, wherein CMC, pectin and xanthan gum were used as stabilizers:

| **Components** | **Quantity, kg** |
|---|---|
| starch | 2.0 |
| CMC | 1.8 |
| Pectin | 7.9 |
| Xanthan gum | 0.2 |
| Sod citrate | 0.58 |
| Whole Milk Powder | 38 |
| Whey protein concentrate powder | 15 |
| Citric acid | 4.8 |
| Phosphoric acid | 1.5 |

### Example 8:

A powdered composition was prepared using the same procedure as in Example 5, except that it contained the following amounts of the ingredients, wherein CMC, pectin and soy polysaccharide were used as stabilizers:

| **Components** | **Quantity, kg** |
|---|---|
| starch | 2.0 |
| CMC | 1.1 |
| Pectin | 1.4 |
| Soy polysaccharide | 7.2 |
| Sod citrate | 0.72 |
| Whole Milk Powder | 38 |
| Whey protein concentrate powder | 15 |
| Citric acid | 4.8 |
| Phosphoric acid | 1.5 |

### Analytical methods used in the examples:

Viscosity: Brookfield viscosity meter, standard method to estimate viscosity and spindles S61 and S62 are used for testing.
Particle size: Beckman particle size analyzer, standard operating procedure and mean particle size results are considered for reference.
Acidity: METTLER TOLEDO is used using standard titration method.
Brix: METTLER TOLEDO brix meter using standard brix estimation method.
pH value: METTLER TOLEDO is used using standard pH method.

### Reconstitution Examples:

### I. Stability test

### Example A

The powders prepared in Example 1 were rehydrated using ambient water at the ratio of 1:40 to produce a solution. Other ingredients like apple juice (20-50 kg), Vitamins (0.1-0.2 kg), Calcium (5-6 kg), and flavor (2-4 kg) were also added. A NutriBoost standard beverage available from Coca-Cola was used as control for comparison. The samples were evaluated with respect to the stability at 38°C. The results are summarized as follows.

**Table 1: 4 weeks after reconstitution**

| **Parameters** | **Standard Nutriboost** | **Acidified milk beverage made from the powders** |
|---|---|---|
| Brix | 13.01 | 13.17 |
| pH | 4.1 | 4.11 |
| Viscosity, mPa.S | 15.5 | 15.1 |
| Particle size, µm | 0.89 | 1.7 (range of 0.6-3) |
| Acidity | 0.265 | 0.276 |

**Table 2:**

| **Particle size tracking** | | | | |
|---|---|---|---|---|
| **Fresh** | **after 2 days** | **after 20 days** | **after 30 days** | **after 64 days** |
| 2.83 µm | 2.83 µm | 2.33 µm | 1.7 µm | 2.089 µm |

The comparison was made between the beverage made from the powdered composition and the commercial Nutriboost® beverage with respect to the stability after 8 weeks at 38°C. The results are shown in Fig. 1.

As can be seen from Fig. 1, no sedimentation and phase separation was observed in the acidified milk beverage obtained from the powdered composition of the invention even after 8 weeks at elevated temperature.

The powdered compositions in Examples 2 to 4 were also tested with respect to the stability after reconstitution. The results are similar to that obtained from Example 1.

### Example B

The powders prepared in Example 5 were stored under ambient conditions for 2 months and then rehydrated using ambient water at the ratio of 1:25 to produce a solution. Other ingredients like apple juice (16 kg) and Flavors (2 kg) were also added. A Pulpy Super Milky standard beverage available from Coca-Cola was used as control for comparison. The samples were evaluated with respect to the stability at 25°C and 38°C. The results are summarized as follows.

**Table 3: Fresh**

| **Parameters** | **Standard Pulpy Super Milky** | **Acidified milk beverage made from the powders** |
|---|---|---|
| Brix | 10.5 | 10.53 |
| pH | 4.1 | 4.11 |
| Viscosity, mPa.S | 28 | 26.2 |
| Particle size, µm | 2.3 | 2.08 (range of 0.6-3) |
| Acidity | - | - |

**Table 4:**

| Particle size tracking | | | |
|---|---|---|---|
| **Fresh** | **after 10 days** | **after 44 days** | **after 64 days** |
| 2.088 µm | 1.934 µm | 2.676 µm | 2.232 µm |

The sample made from the acidified milk powder made as example 5 was quite similar to the standard Pulpy super milky beverage in achieving target pH value on rehydration and also on the stability - no sedimentation and phase separation was observed in the acidified milk beverage obtained from the powdered composition of the invention even after 8 weeks at elevated temperature.

The powdered compositions in Examples 6 to 8 were also tested with respect to the stability after reconstitution. The results are similar to that obtained from Example 5.

### II. Sensory test

In addition, a basic sensory evaluation was carried out for the samples in 1 and 6 weeks after the rehydration. The test shows that there is little difference in taste and appearance between the inventive sample and the control.

## Claims

1. A process for preparing a powdered composition for the production of an acidified milk beverage, comprising:
a) preparing an aqueous solution containing a milk-based ingredient and a stabilizer;
b) acidifying the aqueous solution with a food grade acid under high shear conditions for 30 to 60 minutes;
c) homogenizing the acidified solution; and
d) spray drying the acidified solution into a powder, wherein the powder comprises:
i) 6-31% of a stabilizer, which is selected from the group consisting of carboxymethyl cellulose, pectin, xanthan, guar and carrageen;
ii) 48-87% of a milk-based ingredient, which is milk powder or milk protein concentrate; and
iii) 7-21% of a food-grade acid;
based on the total weight of the powder, wherein the sum of the amounts of all ingredients is equal to 100%;
wherein the acidified solution has the total protein content of 1.0-7.0 wt% and a pH of 3.0-5.0; and
wherein the food grade acid is added in the form of an aqueous solution at the concentration of 3.5-20 wt%..

2. The process according to claim 1, wherein the homogenization is performed at a pressure of 50 to 150 bar.

3. The process of claim 1, wherein an acid bite reducing agent is added to the aqueous solution before acidification, wherein the acid bite reducing agent is a citrate, a bicarbonate, or a phosphate.

4. The process according to any of claims 1-3, further comprising concentrating the acidified solution before drying.

## Patentansprüche

1. Verfahren zur Herstellung einer pulverförmigen Zusammensetzung für die Herstellung eines gesäuerten Milchgetränks, umfassend:
a) Herstellen einer wässrigen Lösung, die einen Inhaltsstoff auf Milchbasis und einen Stabilisator enthält;
b) Säuern der wässrigen Lösung mit einer lebensmittelgeeigneten Säure unter Bedingungen mit hoher Scherkraft für 30 bis 60 Minuten;
c) Homogenisieren der gesäuerten Lösung; und
d) Sprühtrocknen der gesäuerten Lösung zu einem Pulver, wobei das Pulver umfasst:
i) 6-31 % an einem Stabilisator, der ausgewählt ist aus der Gruppe bestehend aus Carboxymethylcellulose, Pektin, Xanthan, Guar und Carrageen;
ii) 48-87 % an einem Inhaltsstoff auf Milchbasis, der Milchpulver oder Milchproteinkonzentrat ist; und
iii) 7-21 % an einer lebensmittelgeeigneten Säure; bezogen auf das Gesamtgewicht des Pulvers, wobei die Summe der Mengen aller Inhaltsstoffe gleich 100 % beträgt;
wobei die gesäuerte Lösung einen Gesamtproteingehalt von 1,0-7,0 Gew.-% und einen pH-Wert von 3,0-5,0 aufweist; und
wobei die lebensmittelgeeignete Säure in der Form einer wässrigen Lösung in der Konzentration von 3,5-20 Gew.-% zugegeben wird.

2. Verfahren gemäß Anspruch 1, wobei die Homogenisierung bei einem Druck von 50 bis 150 bar durchgeführt wird.

3. Verfahren gemäß Anspruch 1, wobei der wässrigen Lösung vor dem Säuern ein Säureangriff-verringerndes Mittel zugegeben wird, wobei das Säureangriffverringernde Mittel ein Citrat, ein Bicarbonat oder ein Phosphat ist.

4. Verfahren gemäß einem der Ansprüche 1-3, ferner umfassend Konzentrieren der gesäuerten Lösung vor dem Trocknen.

## Revendications

1. Procédé pour la préparation d'une composition en poudre pour la production d'une boisson lactée acidifiée, comprenant :
a) la préparation d'une solution aqueuse contenant un ingrédient à base de lait et un stabilisant ;
b) l'acidification de la solution aqueuse avec un acide de qualité alimentaire dans des conditions de cisaillement élevé pendant 30 à 60 minutes ;
c) l'homogénéisation de la solution acidifiée ; et
d) le séchage par pulvérisation de la solution acidifiée en une poudre, la poudre comprenant :
i) 6 à 31 % d'un stabilisant, qui est choisi dans le groupe constitué par une carboxyméthylcellulose, une pectine, un xanthane, un guar et un carraghénane ;
ii) 48 à 87 % d'un ingrédient à base de lait, qui est de la poudre de lait ou un concentré de protéines de lait ; et
iii) 7 à 21 % d'un acide de qualité alimentaire ;
sur la base du poids total de la poudre, la somme des quantités de tous les ingrédients étant égale à 100 % ;
la solution acidifiée possédant une teneur totale en protéines de 1,0 à 7,0 % en poids et un pH de 3,0 à 5,0 ; et
l'acide de qualité alimentaire étant ajouté sous forme d'une solution aqueuse à une concentration de 3,5 à 20 % en poids.

2. Procédé selon la revendication 1, l'homogénéisation étant réalisée à une pression de 50 à 150 bars.

3. Procédé selon la revendication 1, un agent de réduction d'attaque acide étant ajouté à la solution aqueuse avant acidification, l'agent de réduction d'attaque acide étant un citrate, un bicarbonate, ou un phosphate.

4. Procédé selon l'une quelconque des revendications 1 à 3, comprenant en outre la concentration de la solution acidifiée avant le séchage.
